# EUROPEAN PATENT APPLICATION

(11) **EP 2 189 973 A1**
(43) Date of publication of application: **26.05.2010**
(21) Application number: 08425742.7
(22) Date of filing: 20.11.2008
(51) Int. Cl.: G10D 13/00

(54) **Drum-stick for percussion instruments and process for manufacuring such drum-stick**

(71) Applicant: Marovelli, Luca, 10040 Druento (TO) (IT); Nora, Fabio, 10078 Venaria (TO) (IT)
(72) Inventor: Marovelli, Luca, 10040 Druento (TO) (IT); Nora, Fabio, 10078 Venaria (TO) (IT)
(74) Representative: Garavelli, Paolo

(57) **Abstract**

A drum-stick (1) for percussion instruments is described, composed of an elongated body (3) having at least one of its two ends (5) equipped with at least one percussion nose (7) on such instrument, at least the elongated body (3) being internally and longitudinally equipped with at least one weight-reducing recess (9), such elongated body (3) and such nose (7) being obtained in a single piece made of a plastic material. A process for manufacturing such drum-stick (1) is further described.

## Description

The present invention refers to a drum-stick for percussion instruments and to a process for manufacturing such drum-stick.

Drum-sticks for percussion instruments, such as, for example, batteries, are known in the art, and are made of composite materials, such as carbon fibre, charged glass fibre, or graphite, as replacement of traditional wooden drum-sticks.

Such drum-sticks made of composite materials, though being more resistant than the corresponding wooden drum-sticks, at the same time doing without the classical problems of breakages and/or generation of chips, are heavier, creating a very bad use and an increase of user fatigue. In order to solve such inconvenience, the art has proposed drum-sticks made of composite materials equipped with an internal weight-reducing recess, such as for example those disclosed in US-A-4763557, US-A-5341716, US-A-4114503, US-A-4462296, DE-A-4001403 or US-A-4768943.

However, the use of composite materials for manufacturing such drum-sticks makes these latter one excessively costly, and the increase of resistance, and therefore a longer working like, only partly compensates the price increase. Moreover, very often, such drum-sticks made of composite materials are lacking major features for battery players, such as rebouncing power on the instrument and sound quality.

The art further proposes processes for manufacturing drum-sticks made of composite materials equipped with internal recess, like the one disclosed in US-A-4763557, that require the use of removable inserts, around which bands of fibres drenched with resin are wound, in order to make the external cylindrical structure of the drum-stick itself, such inserts being removed once having solidified the composite material to create the internal recess of the drum-stick. Also US-A-4768943, though it discloses the embodiment of a drum-stick for percussion instruments made of plastic material equipped with internal recess, provides for the use of a process for manufacturing such drum-stick by using removable inserts. Such manufacturing processes are then relatively complex, since they comprise in any case at least one positioning step and a following withdrawal of removable inserts, such steps being time- and resouce-intensive.

Moreover, the use of removable inserts allows creating an internal recess only next to the drum-stick handle, having typically a constant section, and not also next to the percussion nose, typically characterised by relevant internal undercuts, resulting in a useless waste of material and an inefficiency of the process itself.

Therefore, object of the present invention is solving the above prior art problems, by providing a drum-stick for percussion instruments equipped with internal recess, made in a single piece and completely made of a plastic material, that has a better sound quality with respect to prior art drum-sticks.

Another object of the present invention is providing a drum-stick for percussion instruments equipped with internal recess, made in a single piece and completely made of a plastic material, that has an increased rebouncing power on the instrument and a much higher sound cleanness with respect to prior art drum-sticks.

Moreover, an object of the present invention is providing a process for manufacturing drum-sticks in a single piece and completely made of plastic material equipped with internal recess that is less complex, quicker, more efficient and economically convenient with respect to prior art processes.

Another object of the present invention is providing a process for manufacturing drum-sticks completely made of plastic material that allows making an internal recess along the whole drum-stick, also next to the percussion nose.

The above and other objects and advantages of the invention, as will appear from the following description, are obtained with a drum-stick for percussion instruments as described in claim 1.

Moreover, the above and other objects and advantages are obtained with a process for manufacturing a drum-stick wholly made of plastic material as described in claim 5.

Preferred embodiments and non-trivial variations of the present invention are the subject matter of the dependent claims.

It will be immediately obvious that numerous variations and modifications (for example related to shape, sizes, arrangements and parts with equivalent functionality) can be made to what is herein described, without departing from the scope of the invention as appears from the claims attached to the present description.

The present invention will be better described by some preferred embodiments thereof, provided as a nonlimiting example, with reference to the enclosed drawings, in which:
- FIG. 1 shows a side view of a preferred embodiment of the drum-stick for percussion instruments according to the present invention;
- FIG. 2 shows a longitudinally sectioned view of the drum-stick of FIG. 1 along section line A-A;
- FIG. 3 shows an enlargement of the part of the drum-stick according to the present invention contained in box B in FIG. 2; and
- FIG. 4 shows an enlargement of the part of the drum-stick according to the present invention contained in box C in FIG. 2.

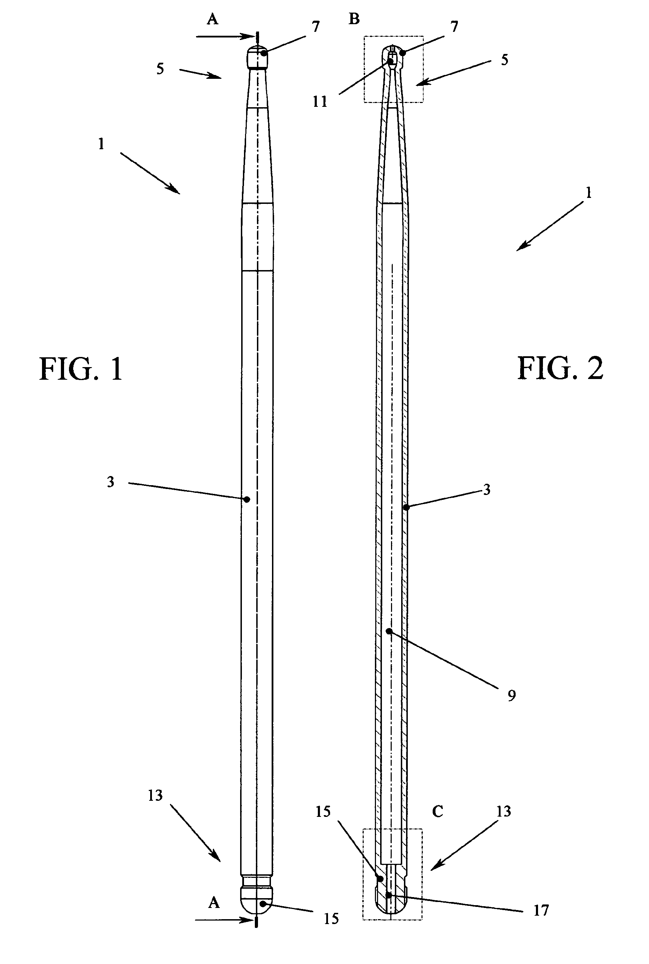

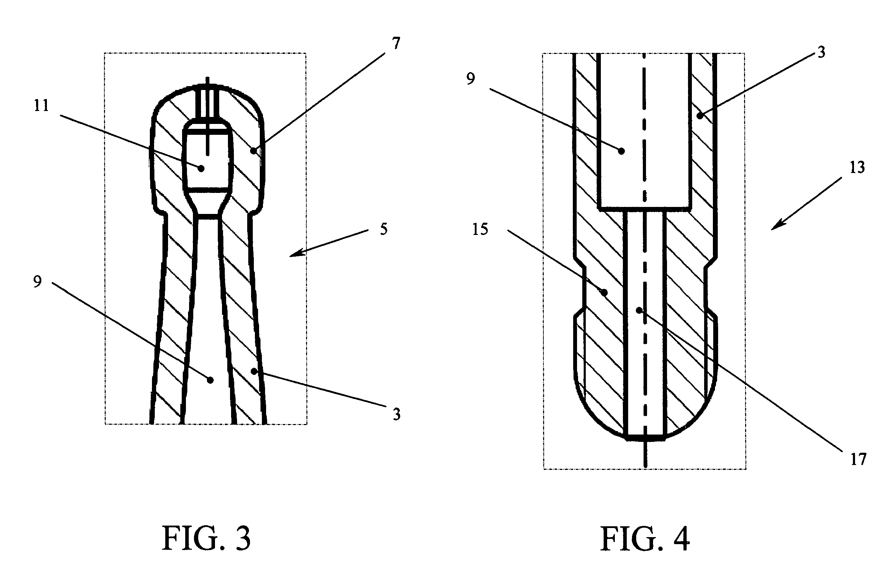

With reference to the Figures, it is possible to note that the drum-stick 1 for percussion instruments according to the present invention is composed of an elongated body 3, typically used as handle by a user, whose shape is substantially and typically cylindrical, having at least one of its two ends 5 equipped with at least one percussion nose 7 on the instrument, at least such elongated body 3 being internally and longitudinally equipped with at least one weight-reducing recess 9 having a substantially cylindrical shape: such weight-reducing recess 9 therefore confers to the elongated body 3 a substantially annular cross-sectional shape. As can be noted in particular in FIG. 2 and 3, the weight-reducing recess 9 can also comprise a portion 11 of weight-reducing recess 9 internal to the percussion nose 7. Obviously, the end 13 of the elongated body 3 opposite to the end 5 equipped with percussion nose 7 can be equipped with a suitable closing fitting 15, also this latter one internally equipped with a respective portion 17 of the weight-reducing recess 9, as can be noted in particular in FIG. 2 and 4. In particular, the sizes of the portion 17 of the weight-reducing recess 9 internal to the closing fitting 17 are such as to allow the correct balancing in the drum-stick 1 centre.

Advantageously, the whole drum-stick 1 according to the present invention, and in particular the elongated body 3, the nose 7 and the closing fitting 15 are obtained in a single piece made of a plastic material. Preferably, such plastic material is a techno-polymer called PA66 with a 30% glass fibre charge.

Obviously, the sizes of the drum-stick 1 according to the present invention, as well as in particular of the percussion nose 7, can be various and such as to completely mirror the shapes and balancing of traditional drum-sticks made of wood or composite materials that can be found on the market, or be adapted to particular user needs. For such purpose, for example, proportions and external shapes of the drum-stick 1 according to the present invention, shown as an example in the Figures, are those of the known drum-stick model 5B.

The present invention further refers to a process for manufacturing a drum-stick for percussion instruments obtained in a single piece made of a plastic material equipped with internal weight-reducing recess, such as for example the drum-stick 1 according to the present invention.

In general, the process according to the present invention provides for the use of an injection process of such plastic material in a suitable die, in parallel with an injection process of at least one high-pressure gas, preferably a high-pressure inert gas, such as for example nitrogen, through a technology called GIT (Gas Injection Technology), in such material in a still-melted state, for creating such internal weight-reducing recess.

In particular, therefore, the process for manufacturing a drum-stick for percussion instruments, and preferably a drum-stick 1 according to the present invention, comprises the steps of:
a) providing at least one matrix die defining the shape of such drum-stick 1, and in particular defining at least the elongated body 3, the nose 7 and the closing fitting 15;
b) injecting, inside such matrix die, such plastic material in a melted state; preferably, such plastic material is a PA66 techno-polymer with 30% glass fibre charge;
c) after a first interval of time Δt₁ preferably included between 0.5 s and 1.5 s from the beginning of step b) of injecting the plastic material, injecting at least one pressurised gas inside the matrix die, and in particular inside such plastic material in a melted state contained inside the matrix die, preferably following an increasing pressure ramp depending on time, such injection preferably performed through at least one nozzle (not shown) longitudinally arranged with respect to such elongated body 3 and next and centrally to such closing fitting 15, in order to make such weight-reducing recess 9; preferably, such pressurised gas is inert, like nitrogen, and can be replaced with a pressurised-water technology;
d) after the start of step c), keeping the pressurised gas inside the matrix die at a constant pressure P preferably included between 150 bar and 180 bar for a second interval of time Δt₂ preferably included between 12 s and 18 s;
e) after having ended step c) of injecting the pressurised gas, making such gas go out of the matrix die, for example by opening suitable discharge valves (not shown) taking back to ambient values the pressure inside the matrix die itself;
f) after a third interval of time Δt₃ preferably included between 18 s and 22 s from the end of step e), in order to allow at least one partial cooling of the plastic material inside the matrix die, opening such matrix die and extracting such drum-stick 1.

Obviously, the present invention further deals with any drum-stick for percussion instruments made of plastic material equipped with internal weight-reducing recess manufactured through the process according to the present invention.

## Claims

1. Drum-stick (1) for percussion instruments composed of an elongated body (3) having at least one of its two ends (5) equipped with at least one percussion nose (7) on said instrument, at least said elongated body (3) being internally and longitudinally equipped with at least one weight-reducing recess (9), **characterised in that** said elongated body (3) and said nose (7) are adapted to be obtained in a single piece made of a plastic material.

2. Drum-stick (1) according to claim 1, **characterised in that** said plastic material è PA66 techno-polymer with a 30% glass fibre charge.

3. Drum-stick (1) according to claim 1, **characterised in that** said weight-reducing recess (9) comprises a portion (11) internal to said percussion nose (7).

4. Drum-stick (1) according to claim 1, **characterised in that** an end (13) of said elongated body (3) opposite to said end (5) is equipped with a closing fitting (15) obtained in a single piece with said elongated body (3) and said nose (7) made of plastic material, said closing fitting (15) being internally equipped' with a portion (17) of said weight-reducing recess (9).

5. Process for manufacturing a drum-stick for percussion instruments made of plastic material equipped with an internal weight-reducing recess, such as a drum-stick (1) according to any one of claims 1 to 4, **characterised in that** the process comprises the steps of:
a) providing at least one matrix die defining a shape of said drum-stick (1);
b) injecting said plastic material in a melted state inside said matrix die;
c) after a first interval of time (Δt₁) from the start of step b), injecting at least one pressurised gas inside said plastic material in a melted state contained inside said matrix die in order to obtain said weight-reducing recess (9);
d) after the start of step c), keeping said pressurised gas inside said matrix die at a constant pressure (P), for a second interval of time (Δt₂),
e) after having ended step c), making said gas go out of said matrix die by taking at ambient values a pressure inside said matrix die;
f) after a third interval of time (Δt₃) from the end of step e), opening said matrix die andd extracting said drum-stick (1).

6. Process according to claim 5, **characterised in that** said plastic material is a PA66 techno-polymer with 30% glass fibre charge.

7. Process according to claim 5, **characterised in that** said first interval of time (Δt₁) is preferably included between 0.5 s and 1.5 s.

8. Process according to claim 5, **characterised in that** said pressurised gas is an inert gas.

9. Process according to claim 8, **characterised in that** said inert gas is nitrogen.

10. Process according to claim 5, **characterised in that** said gas is replaced with pressurised water.

11. Process according to claim 5, **characterised in that** said second interval of time (Δt₂) is included between 12 s and 18 s.

12. Process according to claim 5, **characterised in that** said constant pressure (P) is included between 150 bar and 180 bar.

13. Process according to claim 5, **characterised in that** said third interval of time (Δt₃) is included between 18 s and 22 s.

14. Drum-stick for percussion instruments manufactured through the process of claim 5.
